# FASCICULE DE BREVET EUROPEEN

(11) **EP 1 639 030 B1**
(45) Date de publication et mention de la délivrance du brevet: **03.12.2008**
(21) Numéro de dépôt: 04767464.3
(22) Date de dépôt: 25.06.2004
(51) Int. Cl.: C08G 77/08, C08L 83/04, C08K 5/00, C07F 15/00

(54) **COMPOSITION SILICONE RETICULABLE PAR DESHYDROGENOCONDENSATION EN PRESENCE D UN CATALYSEUR METALLIQUE**
DURCH DEHYDROKONDENSATION IN GEGENWART EINES METALLKATALYSATORS VERNETZBARE SILIKONZUSAMMENSETZUNG
SILICON COMPOSITION WHICH CAN BE CROSSLINKED BY MEANS OF DEHYDROGENATIVE CONDENSATION IN THE PRESENCE OF A METAL CATALYST

(30) Priorité: 30.06.2003 FR 0307908
(43) Date de publication de la demande: 29.03.2006
(73) Titulaire: Bluestar Silicones France, 69486 Lyon Cedex 03 (FR)
(72) Inventeur: BLANC-MAGNARD, Delphine, F-69007 Lyon (FR); STERIN, Sébastien, F-69450 Saint Cyr au Mont d'Or (FR)
(86) Numéro de dépôt international: PCT/FR2004/001616
(87) Numéro de publication internationale: WO 2005/003212

(56) Documents cités:
- EP-B- 0 061 241
- EP-B- 0 602 638
- WO-A-03/087209
- US-A- 5 347 027

## Description

La présente invention est relative à des compositions silicone réticulables par déshydrogéno-condensation entre motifs réactifs ≡SiH et ≡SiOH, employant un complexe de l'iridium comme catalyseur. Elle concerne aussi un procédé de préparation y relatif, les matériaux réticulés ainsi obtenus, ainsi que les articles revêtus, ou constitués, de ces matériaux.

L'invention concerne donc le domaine de la catalyse des réactions de déshydrogénocondensation permettant la polymérisation/réticulation de silicone. Les espèces réactives en jeu sont des monomères, oligomères, et/ou polymères de nature polyorganosiloxane (POS).

Les motifs réactifs concernés dans ces espèces sont d'une part les motifs ≡SiH et d'autre part les motifs ≡SiOH. La déshydrogénocondensation entre ces espèces et ces motifs réactifs silicones conduit à la formation de liaisons ≡Si-O-Si≡ et à la libération d'hydrogène gazeux. Cette déshydrogénocondensation est une alternative aux voies de polymérisation/réticulation connues dans le domaine des silicones, à savoir la voie polyaddition ≡SiH/≡Si-alcényle (vinyle), ainsi qu'à la voie polycondensation ≡SiOR/≡SiOR (avec R = alkyle). Toutes ces voies de polymérisation / réticulation conduisent à des produits silicones plus ou moins polymérisés et plus ou moins réticulés, qui peuvent constituer des produits utilisables dans de multiples applications : adhésifs, produits d'étanchéification, produits de jointage, apprêt d'adhésion, revêtements anti-adhérents, mousses...

Les applications plus particulièrement visées par l'invention sont les revêtements élastomères silicones réticulés utiles comme revêtements anti-adhésifs sur différents supports solides, par exemple des supports souples (fibreux en papier ou tissu e.g.) ou non fibreux, tels que les films polymères (polyester ou polyoléfine e.g.), ou bien encore des supports en aluminium ou en tout autre métal tel que le fer blanc.

Une autre application plus spécialement concernée par l'invention vise les mousses silicones réticulées.

La réaction de déshydrogénocondensation fait appel à des catalyseurs métalliques à base de platine, de rhodium, de palladium, de ruthénium, de bore ou d'iridium, les catalyseur au platine étant les plus courants (FR-B-1 209 131, US-B-4,262,107, EP-A-1 167 424, FR-A-2 806 930).

FR-B-1 209 131 divulgue notamment la réaction entre un silanol Ph₂Si(OH)₂ et un diorganosiloxane [(Me₂HSi)₂O] avec Me = méthyle et Ph = phényle, par déshydrogénocondensation en présence d'acide chloroplatinique (H₂PtCl₆, 6H₂O) qui conduit à un polydiorganosiloxane à motif D : -R₂SiO₂/₂- de type diméthyl ou diphényl. Cette réaction produit un dégagement rapide d'hydrogène.

US-B-4,262,107 concerne une composition silicone de type polyorganosiloxane (POS), comportant plus précisément un polydiméthyldisiloxane à extrémités silanol et un réticulant constitué par un POS à motifs ≡SiH dans la chaîne et à extrémités triméthylsilyle, un catalyseur constitué par un complexe du rhodium (RhCl₃ [(C₈H₁₇)₂S]₃), ainsi qu'un inhibiteur de réticulation (par exemple diéthylmaléate, diéthylacétylène dicarboxylate, triallylisocyanurate, acétate de vinyle).

EP-A-1 167 424 et US-A-2002/0013441 décrivent l'obtention de copolymères silicones blocs linéaires par déshydrogénocondensation de polymères POS à extrémités silanol et de POS aromatique à extrémités ≡SiH en présence d'un catalyseur métallique. Les catalyseurs d'hydrosilylation conviennent, et il est possible d'employer les métaux platine, rhodium, palladium, ruthénium et iridium, de préférence platine, et des composés de ces métaux. Il s'agit surtout d'un complexe du platine tel que le catalyseur de Karstedt.

FR-A-2 806 930 concerne l'utilisation de dérivés de Bore de type Tris (pentafluorophényl)borane.

Il serait d'une grande utilité de disposer d'un panel plus étendu de catalyseurs de déshydrogénocondensation, et notamment de catalyseurs permettant d'optimiser la cinétique de la réaction et le rapport concentration/efficacité du catalyseur. L'invention a donc pour objectif de proposer de nouveaux catalyseurs de déshydrogénocondensation particulièrement performants.

Un autre objectif de l'invention est de proposer de catalyseurs à côut de revient moins élevé que les catalyseurs au platine.

Un autre objectif de l'invention est de proposer un panel de catalyseurs faciles à préparer de façon à offrir plus facilement le catalyseur le mieux adapté à telle ou telle réaction et/ou dans telles ou telles conditions opératoires.

Un autre objectif de l'invention est de proposer des catalyseurs ayant des températures d'activation modérées (mobilisation d'une faible quantité d'énergie pour la catalyse de la déshydrogénocondensation: θ°C < 150°C), et/ou permettant un meilleur contrôle du dégagement d'hydrogène gazeux, de la qualité du produit polymérisé et/ou du réseau réticulé, et/ou enfin permettant de limiter les réactions secondaires.

Un autre objectif essentiel de la présente invention est de proposer des compositions silicone ≡SiH/≡SiOH polymérisables ou réticulables par déshydrogénocondensation en présence d'un tel catalyseur.

La demande de brevet PCT/FR02/01340 déposée le 18 avril 2002 (et non publiée à la date de dépôt de la présente demande), décrit des compositions silicone réticulant par déshydrogénocondensation et utilisant comme catalyseur un complexe de l'iridium répondant à la formule suivante (I') :

IrX(L)(L')₂

dans laquelle :
o Ir est un atome d'Iridium de valence I ou III
o X représente un ligand à un électron, de préférence choisi dans le groupe comprenant les halogènes, l'hydrogène, un acétate, un groupement aromatique ou hétéroaromatique, substitué ou non, CN, RO, RS, R₂N,R₂P avec R correspondant à un motif alkyle, aryle ou arylalkyle
o L et L' représentent indépendamment un ligand à deux électrons, de préférence choisis dans le groupe comportant :
   - les radicaux hydrocarbonés comprenant au moins un motif: 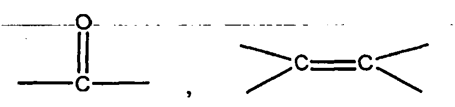
   - les radicaux :
      -PR'³ , -P(OR')³, R'²O, R'²S, R'³N, =CR'² avec R' représentant indépendamment un groupement aromatique ou hétéroaromatique, substitué ou non, ou bien encore un radical alkyle, aryle ou arylalkyle ,
   - CₙHₙ₊₁- ( avec n entier naturel positif), correspondant de préférence à C₆H₅-.

Cette demande de brevet PCT/FR02/01340 cite en particulier le complexe de Vaska IrCl(CO)(triphénylphosphine)₂.

Les objectifs énoncés supra, ainsi que d'autres, sont atteints par la présente invention qui concerne tout d'abord une composition silicone réticulable par déshydrogéno-condensation, cette composition comprenant :
o -A- au moins un monomère, oligomère et/ou polymère organosiloxane ayant, par molécule, au moins un motif réactif ≡SiH ;
o -B- au moins un monomère, oligomère et/ou polymère organosiloxane présentant, par molécule, au moins un motif réactif ≡SiOH ;
o -C- au-moins un complexe catalytique ;
o -D- éventuellement au moins un inhibiteur ou retardateur de réticulation ;
o -E- éventuellement au moins une résine polyorganosiloxane (POS) ;
o -F- éventuellement au moins une charge ;
**caractérisée en ce que** le complexe catalytique -C- est un complexe de l'iridium obtenu en faisant réagir ensemble :
-C1- d'une part un complexe de l'iridium de formule (I) :

   **(IrΣΣ'₂)ₙ**

   dans laquelle :
   1/n est 1 ou 2 et:
      (a) si n est 1, Σ est un ligand LX radicalaire à 3 électrons (suivant la définition donnée dans l'ouvrage « Chimie Organométallique » de Didier Astruc, publié en 2000 par EDP Sciences, Cf. notamment Chapitre 1, « Les complexes monométalliques », pages 31 et suivantes), en particulier un ligand dérivé de l'acétylacétone, d'un β-cétoester, d'un ester malonique, d'un composé allylé, d'un carbamate, d'un dithiocarbamate, d'un acide carboxylique, plus particulièrement un dérivé de l'acétylacétone ou d'un composé allylé; on peut citer notamment les ligands acétylacétonato, allyle, cyclopropényle, carboxylato, carbamato, dithiocarbamato, plus particulièrement acétylacétonato et allyle, de préférence acétylacétonato ;
      (b) si n est 2, E est du type ligand radicalaire X à 1 électron (suivant la définition donnée dans l'ouvrage Chimie Organométallique référencé supra), ayant un comportement particulier en présence des atomes d'iridium ; ce ligand ponte les 2 atomes d'iridium et peut être considéré comme un ligand X à 1 électron pour 1 atome d'iridium et comme un ligand LX à 3 électrons pour l'ensemble des 2 atomes d'iridium ; il peut notamment être choisi notamment parmi les halogéno, alcoxy, aryloxy, de préférence halogéno, plus particulièrement chloro, ou alcoxy ;
   2/Σ', identiques ou différents, de préférence identiques, représentent chacun un ligand L à 2 électrons (suivant la définition donnée dans l'ouvrage Chimie Organométallique référencé supra), par exemple : les donneurs d'un doublet de liaison π, tels que oléfines, alcynes, doubles liaisons C=O d'un aldéhyde ou d'une cétone, C=N, C=S ; les donneurs d'un doublet de liaison σ, tels que les liaisons H-H (dihydrogène), les liaisons H-Si notamment dans les silanes (H-SiR₃) ; les ligands choisis dans le groupe suivant : organophosphorés, R₂O, R₂S, NR₃, THF ; les ligands organophosphorés sont notamment de type P(OR)ₚ(R)_{q} avec p et q allant de 0 à 3, sachant que p+q = 3, de préférence phosphines PR₃ et phosphites P(OR)₃ (les groupements R sont tels que définis plus loin sous -C2- ;
      les ligands Σ' préférés sont les groupes hydrocarbonés comprenant au moins un motif 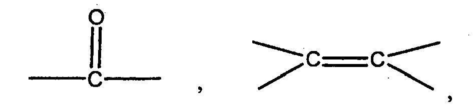 ceux du dernier type étant les plus préférés, comme par exemple le cyclooctène ;
   on peut préciser que les groupes hydrocarbonés peuvent être linéaires, ramifiés, aromatiques ou (poly)cycliques, éventuellement interrompus par un ou plusieurs hétéroatomes (e.g. O, S, N), comportant de 2 à 18 C ; il peut s'agir de ligands comportant deux de ces motifs (de préférence identiques) capables de se lier à l'atome d'iridium (dans ce cas les deux fonctionalités E' sont de préférence fournies par un seule et même molécule reliée à l'iridium par ses deux fonctions donneuses d'électrons), par exemple un composé cyclique présentant deux doubles liaisons, e.g. le 1,5-cyclooctadiène, ou un diène présentant des doubles liaisons éloignées (« diène éloigné »). Ainsi, le 1,5-cyclooctadiène est une modalité préférée ;

-C2- d'autre part un ligand Σ*_{d}* choisi parmi R₂S, R₂O, NR₃, les carbènes (voir par exemple W.A. Herrmann, Angew. Chem. Int. Ed . Engl. 2002, 41, 1290-1309), les organophosphorés, notamment de formule P(OR)ₚ(R)_{q} avec p et q allant de 0 à 3, sachant que p+q = 3, de préférence phosphines PR₃ et phosphites P(OR)₃ ; formules dans lesquelles les radicaux R, identiques ou différents, sont des radicaux alkyle linéaires ou ramifiés, ayant notamment de 1 à 30 C, de préférence de 1 à 12 C; alkyle comportant un ou plusieurs cycles, notamment 1 ou 2, un cycle pouvant avoir notamment de 4 à 14 C, de préférence de 5 à 8 C; aryle ou aralkyle, comprenant un ou plusieurs cycles aromatiques
   ou hétéroaromatiques accolés ou non accolés, notamment 1 ou 2 cycles, un cycle pouvant comprendre de 4 à 14 C, de préférence de 5 à 8 C ; les cycles peuvent éventuellement être substitué(s) par un ou plusieurs, notamment de 1 à 2, groupes tels que alcoxy, halogénure, amino, alkyle linéaire ou ramifié, ayant notamment de 1 à 12 C, de préférence de 4 à 12 C; il peut notamment s'agir d'un radical phényle, éventuellement substitué comme indiqué supra.

Suivant un mode de réalisation préféré, le complexe de l'iridium est un complexe dimère (n = 2) de formule (I') suivante : 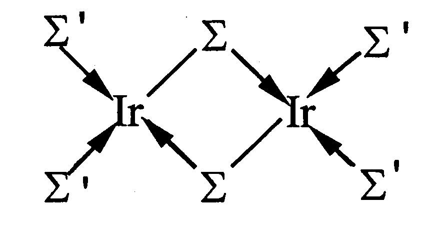 dans laquelle Σ et Σ' ont les significations données supra, avec les préférences indiquées supra au regard de la formule (I).

Suivant un mode de réalisation particulier, le complexe catalytique -C- est obtenu par réaction entre :
d'une part C1bis/ un complexe dimère de formule (I'), dans laquelle :
   - Σ est un ligand radicalaire X à 1 électron choisi parmi les halogéno, alcoxy, aryloxy, de préférence halogéno, plus particulièrement chloro, ou alcoxy,
   - Σ' sont des ligands L à 2 électrons formés de groupes hydrocarbonés comprenant au moins un motif 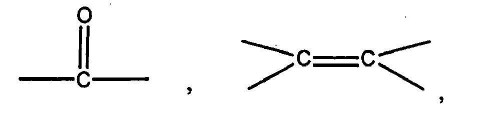 de préférence de groupes hydrocarbonés comprenant le second motif, plus préférentiellement avec les deux Σ' portés par le même atome Ir étant portés par la même molécule, e.g. le 1,5-cyclooctadiène,
   et d'autre part C2bis/ un ligand Σ*_{d}* choisi parmi R₂S, R₂O, NR₃, les carbènes et plus particulièrement les organophosphorés, notamment de formule P(OR)ₚ(R)_{q} avec p et q allant de 0 à 3, sachant que p+q = 3, de préférence phosphines PR₃ et phosphites P(OR)₃, avec R comme défini supra, notamment R représentant des groupes aryle ou aralkyle identiques ou différents, de préférence identiques, comprenant un ou plusieurs cycles aromatiques ou hétéroaromatiques accolés ou non accolés, notamment 1 ou 2 cycles, un cycle pouvant comprendre de 4 à 14 C, de préférence de 5 à 8 C, e.g. phényle. Ce ou ces cycles peuvent être substitués par un ou plusieurs groupes tels que alcoxy, halogénure, amino et alkyle linéaire ou ramifié comme vu supra.

Suivant un mode de réalisation préféré, le complexe dimère de l'iridium (I') est le dichlorure de bis(1,5-cyclooctadiène)diiridium(I) de formule [IrCl(cyclooctadiène)]₂. Il s'agit d'un produit commercial.

Suivant un mode de réalisation préféré, le ligand Σ*_{d}* est la triphénylphosphine (TPP). A titre d'exemple, on peut aussi citer la tris(paraméthoxyphényl)phosphine.

Suivant un mode de réalisation préféré, le complexe catalytique -C- est le produit du mélange du dichlorure de bis(1,5-cyclooctadiène)diiridium(I) et de la TPP.

Comme indiqué infra, le complexe catalytique -C- est de préférence obtenu en faisant réagir les espèces susmentionnées à la température ambiante, e.g. aux alentours de 25 °C et à l'air libre, éventuellement en présence d'un solvant permettant, s'il y a lieu, de solubiliser les espèces réactives. Il est bien entendu que des conditions réactionnelles différentes peuvent être appliquées de manière équivalente, de manière à obtenir un complexe catalytique conforme.

La mise en oeuvre d'un tel complexe catalytique -C- permet de catalyser efficacement la réaction de déshydrogénocondensation entre espèces siloxaniques ≡SiH et ≡SiOH, dans des conditions douces de température, en général à des températures inférieures à 150°C, notamment à 100°C et éventuellement à la température ambiante. Des réseaux ou des polymères silicones sont ainsi obtenus en quelques minutes, avec des rapports ≡SiH/≡SiOH variables.

Les complexes catalytiques judicieusement sélectionnés conformément à l'invention sont performants et économiques, notamment au regard des catalyseurs à base de platine.

Il est très simple de tester différents couples complexe de l'iridium-ligand Σ*_{d}* et d'observer leurs propriétés et comportements. Comme cela est illustré dans la partie exemples, la préparation du complexe catalytique ne requiert pas de procédé complexe ni de conditions opératoires critiques. Il suffit par exemple de préparer un mélange d'un complexe de l'iridium et d'un ligand Σ*_{d}* à tester, éventuellement de mettre ce mélange en solution dans un solvant tel que du toluène dans le cas où les espèces de départ sont sous forme solide, puis de mélanger le tout avec une composition silicone comprenant au moins un POS A et un POS B selon l'invention, éventuellement un retardateur de réticulation, et d'observer le temps de réticulation à température ambiante et/ou à température plus élevée, e.g. dans des conditions de température voisines de l'application pratique recherchée. Les phosphites et phosphines sont par exemple des espèces chimiques largement accessibles. Il est notamment possible de tester des combinaisons de ligands Σ*_{d}* et de complexes de l'iridium commerciaux, tels que les phosphites et phosphines et le dichlorure de bis(1,5-cyclooctadiène)diiridium et le 1,5-cyclooctadiène (acétylacétonato)iridium L'intégration, dans la préparation de la composition silicone, d'une étape simple de préparation du complexe catalytique présente donc des avantages bien évidents et parmi eux la possibilité de disposer de complexes catalytiques variés, adaptés aux circonstances (e.g. adaptés aux conditions de température et de durée de réticulation).

Ces complexes catalytiques sont en particulier intéressants pour préparer des réseaux silicone élastomères dans des conditions douces et économiques. Les applications visées dans ce cas concernent notamment l'anti-adhérence papier où l'on souhaite remplacer les systèmes actuels par des systèmes moins onéreux et les mousses de silicones où l'on recherche à contrôler le dégagement d'hydrogène et la qualité du réseau. Pour la première application, il est préférable de contrôler la diffusion de l'hydrogène afin d'éviter la formation de bulles. Pour la seconde application, il faut gérer la taille des bulles, afin d'optimiser les propriétés de la mousse finale. Ces résultats sont d'autant plus significatifs que la réactivité des espèces siloxaniques, notamment pour former des produits non linéaires (réticulés), n'est pas très élevée si on la compare à celle des hydrogénosilanes et des alcools dans la déshydrogénocondensation.

Sur le plan quantitatif, on emploie de 1 ppm à 1000 ppm, notamment de 1 ppm à 300 ppm d'iridium métal par rapport à la masse constituée par le mélange des huiles à ≡SiH et ≡SiOH. Lorsqu'il est question d'intervalles dans la présente demande, les bornes sont incluses.

Le complexe catalytique emploie notamment de 0,5 à 10, en particulier de 0,5 à 5 plus particulièrement de 0,5 à 2 moles de ligand Σ*_{d}* pour 1 mole d'Ir. Suivant le mode de réalisation préféré de l'invention, on emploie de 0,75 à 1,5, notamment de 0,75 à 1,25 et mieux encore 1 mole de ligand Σ*_{d}* pour 1 mole d'Ir.

L'espèce siloxanique -A- à motifs réactifs ≡SiH est de préférence choisie parmi les espèces qui possèdent au moins un motif de formule (II) et qui sont terminées par des motifs de formule (III), ou parmi les espèces cycliques (comportant en général de 3 à 12 Si) constituées de motifs de formule (II), ces formules étant représentées ci-dessous : 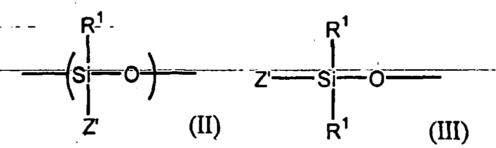 dans lesquelles :
- les symboles R¹, sont identiques ou différents et représentent :
   · un radical alkyle linéaire ou ramifié contenant de 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone, éventuellement substitué,
   · une partie aralkyle ayant une partie alkyle contenant entre 5 et 14 atomes de
   · carbone et une partie aryle contenant entre 6 et 12 atomes de carbone, substituée éventuellement sur la partie aryle par des halogènes, des alkyles et/ou des alcoxyles contenant de 1 à 3 atomes de carbone,
- les symboles Z sont semblables ou différents et représentent :
   · H,
   · un groupement répondant à la même définition que celle donnée ci-dessus pour R¹,
avec, par molécule, au moins un des symboles Z représentant H.

S'agissant des espèces siloxaniques -B- à motifs réactifs ≡SiOH, sont notamment retenues dans le cadre de l'invention, celles possédant au moins un motif de formule (IV) et terminées par des motifs de formule (V), ou des espèces cycliques (comportant en général de 3 à 12 Si) constituées de motifs de formule (IV), ces formules étant représentées ci-dessous : 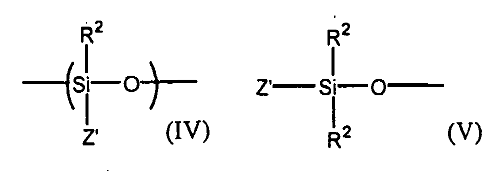 dans lesquelles :
- les symboles R² sont identiques ou différents et représentent :
   · un radical alkyle linéaire ou ramifié contenant de 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone, éventuellement substitué,
   · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant de 1 à 3 atomes de carbone,
- les symboles Z' sont semblables ou différents et représentent :
   · un groupement hydroxyle,
   · un groupement répondant à la même définition que celle ci-dessus pour R², aavec, par molécule, au moins un des symboles Z' représentant OH.

Les espèces de type -A- et -B- peuvent également inclure dans leur structure des motifs dits (Q) ou (T) définis comme indiqué ci-après : 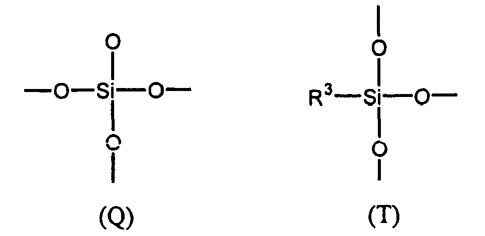 avec R³ pouvant représenter l'un des substituants proposés pour R¹ ou R².

Selon un mode de réalisation avantageux de l'invention, les polyorganosiloxanes - A- utilisés comportent de 1 à 50 motifs SiH par molécule.

Selon un mode de réalisation avantageux de l'invention, les polyorganosiloxanes - B- utilisés comportent de 1 à 50 motifs SiOH par molécule.

Selon un mode de réalisation préféré, les polyorganosiloxanes -A- répondent à la formule générale (VI) : 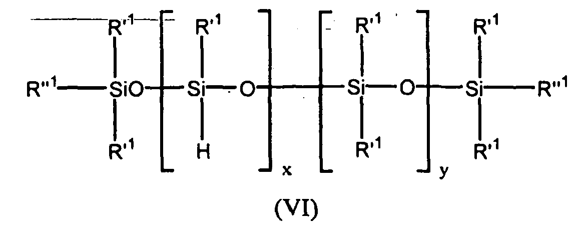 dans laquelle :
- x et y représentent chacun un nombre entier ou fractionnaire variant entre 0 et 200,
- R'¹ et R"¹ représentent indépendamment l'un de l'autre :
   · un radical alkyle linéaire ou ramifié contenant de 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone, éventuellement substitué,
   · une partie aralkyle ayant une partie alkyle contenant entre 5 et 14 atomes de carbone et une partie aryle contenant entre 6 et 12 atomes de carbone, substituée éventuellement sur la partie aryle,
- R"¹ pouvant également correspondre à l'hydrogène, avec la condition selon laquelle au moins l'un des radicaux R"¹ (de préférence les deux) correspondent à l'hydrogène quand x = 0.

Selon un mode de réalisation préféré, les polyorganosiloxanes -B- répondent à la formule générale (VII) : 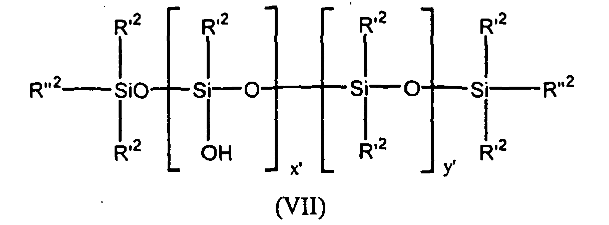 dans laquelle :
- x' et y' représente chacun un nombre entier ou fractionnaire variant entre 0 et 1200,
- R'² et R"² représentent indépendamment l'un de l'autre :
   · un radical alkyle linéaire ou ramifié contenant de 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone, éventuellement substitué,
   · une partie aralkyle ayant une partie alkyle contenant entre 5 et 14 atomes de carbone et une partie aryle contenant entre 6 et 12 atomes de carbone, substituée éventuellement,
- R"² pouvant également correspondre à OH, avec la condition selon laquelle au moins l'un des radicaux R"² (de préférence les deux) correspondent à OH quand x'=0.

Conviennent tout particulièrement à l'invention à titre de polyorganosiloxanes -Ales composés suivants : 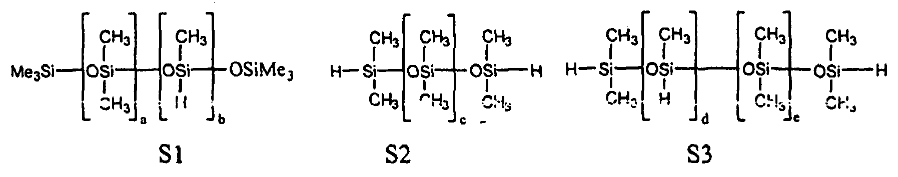 avec a, b, c, d et e représentant un nombre variant de :
- dans le polymère de formule S1 :
   0 ≤ a ≤ 150 de préférence 0 ≤ a ≤ 100 de préférence 0 ≤ a ≤ 20, et
   1 ≤ b ≤ 55 de préférence 10 ≤ b ≤ 55 de préférence 30 ≤ b ≤ 55
- dans le polymère de formule S2 :
   0 ≤ c ≤ 15
- dans le polymère de formule S3 :
   5 ≤ d ≤ 200 de préférence 20 ≤ d ≤ 50, et
   2 ≤ e ≤ 50 de préférence 10 ≤ e ≤ 30.

Conviennent tout particulièrement à l'invention à titre de polyorganosiloxanes -B-les composés de formule 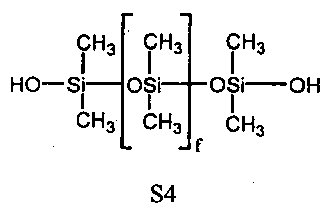 avec 1 ≤ f ≤ 1200 de préférence 50 ≤ f ≤ 400, et plus préférentiellement encore 150 ≤ f ≤ 250.

Dès lors que les espèces siloxaniques -A- et -B- sont des oligomères, des polymères, ils peuvent être décrits comme indiqué ci-après.

Le POS -A- peut être linéaire (e.g. (VI)), ramifié ou cyclique. Pour des raisons économiques, sa viscosité est de préférence inférieure à 100 mPa.s à 25°C; les radicaux organiques identiques ou différents sont de préférence méthyle, éthyle et/ou phényle. Lorsque le POS est linéaire, les atomes d'hydrogène des fonctions ≡SiH sont liés directement aux atomes de silicium situés en bout(s) de chaîne et/ou dans la chaîne.

A titre d'exemple de constituant -A- linéaire, on peut citer les polyméthylhydrogénosiloxanes à extrémités triméthylsiloxyl et/ou hydrogénodiméthylsiloxy.

Parmi les polymères cycliques, peuvent être cités ceux répondant aux formules suivantes :

[OSi(CH₃)H]₄ ; [OSi(CH₃)H]₅ ; [OSi(CH₃)H]₃ ; [OSi(CH₃)H]₈ ; [OSi(C₂H₅)H]₃.

A titre d'exemples concrets de polymères ramifiés peuvent être cites :

CH₃Si[CH₃)₃] [OSi(CH₃)₂H]₂ ; Si[OSi(CH₃)(C₂H₅)H] [OSi(CH₃)₂H]₃,

ainsi que ceux constitués de motifs SiOH₂ et H(CH₃)₂ SiO_{0,5} de rapport CH₃/Si de 1 à 1,5.

Le constituant -B- peut présenter une viscosité pouvant atteindre 200 000 mPa.s. Pour des raisons économiques, on choisit un constituant dont la viscosité est généralement de l'ordre de 20 à 10 000 mPa.s.

Les groupes organiques identiques ou différents généralement présents dans les huiles ou gommes α,ω-hydroxylées sont les radicaux méthyle, éthyle, phényle, trifluoropropyle. De préférence, au moins 80 % en nombre desdits groupes organiques sont des groupes méthyles liés directement aux atomes de silicium. Dans le cadre de la présente invention, on préfère plus spécialement les α,ω-bis(hydroxy)polydiméthylsiloxanes.

Les espèces -B- peuvent comprendre des résines à fonctions silanol présentent par molécule au moins un des motifs R'SiO_{0,5} (motif M) et R'²SiO (motif D), en association avec au moins un des motifs R'SiO_{0,5} (motif T) et SiO₂ (motif Q). Les radicaux R' généralement présents sont méthyle, éthyle, isopropyle, tertiobutyle et n-hexyle. Comme exemples de résines, on peut citer les résines MQ(OH), MDQ(OH), TD(OH) et MDT(OH).

Il est possible de mettre en oeuvre des solvants des POS -A- ou -B-, de façon à régler la viscosité de la composition. A titre d'exemples de tels solvants classiques de polymères silicones, on peut citer les solvants de type aromatique tels que xylène et toluène, les solvants alphatiques saturés tels que hexane, heptane, White-Spirit®, tétrahydrofurane et diéthyléther, les solvants chlorés tels que chlorure de méthylène et perchloroéthylène. Dans le cadre de la présente invention, on préfèrera toutefois ne pas utiliser de solvant.

Les quantités respectives en espèces siloxaniques -A- et -B- sont également déterminantes pour la bonne conduite de la déshydrogénocondensation de la composition selon l'invention.

Ainsi, le ratio ≡SiH/≡SiOH est avantageusement compris entre 1 et 100, de préférence entre 2 et 50 et, plus préférentiellement encore entre 2 et 25.

La composition selon l'invention peut également comprendre au moins un inhibiteur ou retardateur de réticulation -D-. Un tel constituant est en général utilisé pour conférer à la composition prête à l'emploi, une certaine durée de vie en pot (« pot-life »). En jouant d'une part sur la nature de l'ensemble catalytique et sur sa concentration dans la composition (dont il découle une vitesse de réticulation donnée) et d'autre part sur la nature du retardateur et sur sa concentration, il est possible d'ajuster la durée de vie en pot. L'activité de l'ensemble catalytique est restituée par chauffage (thermoactivation). Le retardateur est de préférence choisi parmi les alcools acétyléniques (éthynylcyclohexanol : ECH) et/ou les diallylmaléates et/ou les triallylisocyanurates et/ou les dialkylmaléates (diéthylmaléates et/ou les dialkylalcinyledicarboxylates) (diéthyleacéthylène dicarboxylate) ou bien encore parmi les polyorganosiloxanes, avantageusement cycliques et substitués par au moins un alcényle, le tétraméthylvinylcyclotétrasiloxane étant particulièrement préféré, ou les maléates alkylés.

Les alcools acétyléniques (voir par exemple FR-B-1 528 464 et FR-A-2 372 874) sont les retardateurs préférés. Il s'agit notamment de ceux répondant à la formule suivante :

R¹-(R²)C(OH)-C≡CH

dans laquelle :
- R¹ est un radical alkyle linéaire ou ramifié, ou un radical phényle ;
- R² est H ou un radical alkyle linéaire ou ramifié, ou un radical phényle ;
   les radicaux R¹, R² et l'atome de carbone situé en alpha
   de la triple liaison pouvant éventuellement former un cycle ;
   le nombre total d'atomes de carbone contenu dans R¹ et R² étant d'au moins 5, de préférence de 9 à 20.

Lesdits alcools sont, de préférence, choisis parmi ceux présentant un point d'ébullition supérieur à 250°C. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

Un tel retardateur est notamment présent à raison de 3 000 ppm au maximum, de préférence à raison de 100 à 2000 ppm par rapport au poids total des composés -A- et -B-.

La composition selon l'invention peut également comprendre une ou plusieurs résines POS -E-. Ces résines sont des oligomères ou polymères POS ramifiés bien connus et disponibles dans le commerce. Elles sont présentes sous la forme de solutions, de préférence siloxaniques. Elles présentent, dans leur structure, au moins deux motifs différents choisis parmi ceux de formule R*₃SiO_{0,5} (motif M), R*₂SiO (motif D), R*SiO_{1,5} (motif T) et SiO₂ (motif Q), l'un au moins de ces motifs étant un motif T ou Q.

Les radicaux R* sont identiques ou différents et sont choisis parmi les radicaux alkyles linéaires ou ramifiés en C₁-C₆, les radicaux alcényles en C₂-C₄, phényle, trifluoro-3,3,3 propyle. On peut citer par exemple : comme radicaux R* alkyles, les radicaux méthyle, éthyle, isopropyle, tertiobutyle et n-hexyle, et comme radicaux R* alcényles, les radicaux vinyles. On doit comprendre que dans les résines POS -E- du type précité, pour une partie d'entre eux, les radicaux R* sont des radicaux alcényles.

Comme exemples d'oligomères ou de polymères organopolysiloxanes ramifiés -E-, on peut citer les résines MQ, les résines MDQ, les résines TD et les résines MDT, les fonctions alcényles pouvant être portées par les motifs M, D et/ou T. Comme exemples de résines -E- qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.

Cette résine -E- de structure est avantageusement présente dans une concentration comprise entre 10 et 70 % en poids par rapport à l'ensemble des constituants de la composition, de préférence entre 30 et 60 % en poids et, plus préférentiellement encore, entre 40 et 60 % en poids.

La composition selon l'invention peut également contenir une charge -F-, de préférence minérale et choisie parmi les matières siliceuses ou non.

Quand il s'agit de matières siliceuses, elles peuvent jouer le rôle de charge renforçante ou semi-renforçante. Les charges siliceuses renforçantes sont de préférence choisies parmi les silices colloïdales, les poudres de silice de combustion et de précipitation ou leurs mélanges. Les charges siliceuses semi-renforçantes telles que des terres de diatomées ou du quartz broyé, peuvent être également employées. Ces poudres présentent une taille moyenne de particule généralement inférieure à 0,1 µm et une surface spécifique BET supérieure à 50 m²/g, de préférence comprise entre 100 et 300 m²/g.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 µm et une surface BET inférieure à 100 m²/g_{.}

De façon pratique mais non limitative, la charge employée est une silice.

La charge peut être traitée à l'aide de tout agent de compatibilisation approprié et notamment l'hexaméthyldisilazane. Pour plus de détails à cet égard, on peut se référer par exemple au brevet FR-B-2 764 894.

Sur le plan pondéral, on préfère mettre en oeuvre une quantité de charge comprise entre 5 et 30 %, de préférence entre 7 et 20 %, en poids par rapport à l'ensemble des constituants de la préparation.

Naturellement, la composition peut être enrichie à l'aide de toutes sortes d'additifs selon les applications finales visées.

Dans l'application anti-adhérence sur supports souples (papier ou film polymère), la composition peut comprendre un système modulateur d'adhérence sélectionné parmi les systèmes connus. Il peut s'agir de ceux décrits dans le brevet français FR-B-2 450 642, le brevet US-B-3,772,247 ou la demande de brevet européen EP-A-0 601 938. A titre d'exemples, on peut citer les modulateurs à base :
o de 96 à 85 parties en poids d'au moins une résine polyorganosiloxane (A) réactive de type : MD^{Vi}Q, MM^{Vi}Q, MD^{Vi}T, MM^{Héxényle}Q ou MM^{Allyloxypropyle}Q,
o de 4 à 15 parties en poids d'au moins une résine (B) non réactive de type: MD'Q, MDD'Q, MDT', MQ ou MDQ.

D'autres additifs fonctionnels de cette composition, peuvent être des agents de stabilisation, des bactéricides, des photosensibilisateurs, des fongicides, des inhibiteurs de corrosion, des agents antigels, des agents de mouillage, des antimousses, des latex synthétiques, des colorants ou des acidifiants.

Parmi les additifs classiques, on peut citer également les promoteurs d'adhérence tels que par exemple ceux comprenant au moins un organosilane alcoxylé, au moins un composé organosilicié époxydé, et au moins un chélate de métal et/ou un alcoxyde métallique par exemple VTMO (VinylTriMéthoxySilane), GLYMO (GLYcidoxypropyltriMéthOxysilane), TTB (titanate de tertiobutyle).

Cette composition peut être une solution ou une émulsion. Dans ce dernier cas, elle peut comporter alors au moins un tensioactif et éventuellement au moins un agent de fixation du pH tel que HCO₃⁻/CO₃²⁻ et/ou H₂PO₄⁻/HPO₄²⁻.

La présente invention a aussi pour objet l'utilisation d'un complexe catalytique de l'iridium tel que défini dans la présente demande, comme catalyseur de déshydrogénocondensation d'une composition silicone réticulant par déshydrogénocondensation, cette composition étant définie par ailleurs dans la présente demande.

La présente invention a encore pour objet les complexes catalytiques susceptibles d'être obtenus conformément à l'invention, en faisant réagir au moins un complexe de l'iridium tel que défini supra, et au moins un ligand tel que défini supra.

Selon encore un autre de ses aspects, la présente invention concerne un procédé pour polymériser et/ou réticuler une composition telle que définie ci-dessus. Ce procédé est caractérisé en ce que l'on effectue une déshydrogénocondensation entre lesdits composés -A- et -B- et en ce que ladite déshydrogénocondensation est initiée par thermoactivation du complexe catalytique -C-. Le complexe catalytique conforme à l'invention peut être préparé dans une première étape, par mélange des espèces susmentionnées, comme décrit supra.

Selon une autre variante de l'invention, l'invention concerne un procédé de préparation d'un polyorganosiloxanes branché comprenant au moins deux chaînes polyorganosiloxanes reliées entre elles par un groupement siloxyle Si-O-Si dans lequel on effectue une réaction de déshydrogénocondensation entre un monomère, oligomère ou polymère organosiloxane A' comprenant des motifs réactifs ≡SiH et un monomère, oligomère ou polymère organosiloxane B' comprenant des motifs-réactifs ≡SiOH caractérisé en ce que ladite réaction de déshydrogénocondensation est effectuée en présence du complexe catalytique C défini comme ci-dessus ou selon l'une des revendications 1 à 15 et éventuellement initiée par thermoactivation. Selon un mode préférentiel, le ratio ≡SiH/≡SiOH est supérieur à 1.

Le complexe catalytique peut soit être ajouté au mélange des composés A et B, par exemple des polymères du type S1 ou S2 ou S3 avec un polymère du type S4, soit, de préférence, être au préalable mélangé avec le composé B, par exemple le polymère du type S4, avant d'être mis en présence du composé A, par exemple le polymère S1 ou S2 ou S3. Généralement, les mélanges sont réalisés sous agitation à température ambiante.

Le complexe catalytique peut être mis en oeuvre tel quel ou en solution dans un solvant.

La solution de complexe catalytique peut par exemple être utilisée pour préparer un bain avec le ou les monomères, oligomères et/ou polymères à polymériser et/ou réticuler par déshydrogénocondensation, de manière que la concentration du ou des complexes catalytiques présents soit comprise entre 0,01 et 5% en poids dans ledit bain; et de préférence entre 0,05 et 0,5%.

Les solvants utilisables peuvent notamment être des alcools encombrés, des esters, des éthers, des solvants aromatiques, l'eau à l'état de traces et les carbonates. Pour les alcools, on peut citer l'isopropyl-benzyl-alcool, l'alcool benzylique. Pour les éthers, on peut citer le di-n-butyléther. Pour les esters, on peut citer le dibutylmaléate, diméthyléthylmalonate, salicylate de méthyle, dioctyladipate, tartrate de butyle, lactate d'éthyle, lactate de n-butyle, lactate d'isopropyle. D'autres solvants sont le toluène et le tétrahydrofurane.

La préparation de la composition silicone selon l'invention, utilisable notamment comme base d'enduction pour la réalisation de revêtements anti-adhérents à caractère hydrofuge s'effectue à l'aide des moyens et selon les méthodologies de mélange bien connues de l'homme de l'art qu'il s'agisse de compositions avec ou sans solvants ou d'émulsions.

L'invention concerne également un procédé de réalisation d'au moins un revêtement anti-adhérent sur un support - de préférence souple -, caractérisé en ce qu'il comprend l'application, sur ce support, d'une composition telle que définie ci-dessus, en mettant en oeuvre de préférence des POS -A- et -B- tels que définis ci-dessus, puis à faire en sorte que la réticulation intervienne.

Conformément à ce procédé, les compositions peuvent être appliquées à l'aide de dispositifs utilisés sur les machines industrielles d'enduction du papier tels qu'une tête d'enduction à rouleaux, e.g. à cinq rouleaux, des systèmes à lames d'air ou à barre égalisatrice, sur des supports ou matériaux souples, puis durcies par circulation dans des dispositifs de chauffage appropriés, tels que fours-tunnels chauffés à 70-200°C ; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180°C.

Lesdites compositions peuvent être déposées sur tout matériau ou substrat souple tel que papiers de types divers (e.g. supercaléndré, couché, glassine), cartons, feuilles de cellulose, feuilles en métal, films de matière plastique (polyester, polyéthylène, polypropylène, etc.).

Les quantités de compositions déposées peuvent être de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques, e.g. caoutchoucs, acryliques ou autres, sensibles à la pression. La matière adhésive est alors aisément détachable dudit support ou matériau.

Les supports souples revêtus d'un film silicone anti-adhérent peuvent être par exemple:
- un ruban adhésif dont la face interne est enduite d'une couche d'adhésif sensible à la pression et dont la face externe comporte le revêtement silicone anti-adhérent ;
- ou un papier ou un film polymère de protection de la face adhésive d'un élément autocollant ou adhésif sensible à la pression ;
- ou un film polymère du type polychlorure de vinyle (PVC), Polypropylène, Polyéthylène ou Polyéthylènetéréphtalate.

Les compositions selon l'invention sont utiles dans le domaine des revêtements anti-adhérents sur les peintures, de l'encapsulation de composants électriques et électroniques, des revêtements pour textiles, ainsi que dans le domaine du gainage de fibres optiques.

La présente invention a également pour objet les résines ou polymères susceptibles d'être obtenus à partir des compositions décrites précédemment.

L'invention va être maintenant décrite plus en détail à l'aide d'exemples non limitatifs de mise en oeuvre.

### EXEMPLES

### Exemples 1 à 10 et Contre-exemple 1

### Mode opératoire général pour les exemples 1 à 10 :

Un mélange d'huiles silicone est préparé à partir des huiles réactives suivantes :
- Une huile polyméthylhydrogénosiloxane, contenant 1600 meq SiH/100g et ayant une viscosité de 30mPa.s, ci-après huile SiH,
- Une huile polydiméthylsiloxane α,ω-dihydroxylée contenant 14 meq SiOH/100g et ayant une viscosité de 750mPa.s, ci-après huile SiOH.

Par ailleurs, les quantités voulues de complexe d'iridium [IrClCod]₂ et de ligand Σ_{d} sont pesées dans un flacon de 30ml muni d'un agitateur magnétique, puis diluées avec une faible quantité de toluène désulfurisé (0.5ml). A cette solution, est ajoutée la quantité nécessaire du mélange d'huiles silicone préformé. Les mesures de temps débutent à ce moment, en même temps que l'agitation magnétique démarre.

Après agitation à température ambiante, le temps de prise en masse (réticulation) est mesuré. Les conditions et les résultats sont regroupés dans le tableau 1.

### Mode opératoire général pour le contre-exemple 1

Un mélange d'huiles silicone est préparé à partir des huiles réactives suivantes :
- Une huile polyméthylhydrogénosiloxane, contenant 1600 meq SiH/100g et ayant une viscosité de 30mPa.s, ci-après huile SiH,
- Une huile polydiméthylsiloxane α,ω-dihydroxylée contenant 14 meq SiOH/100g et ayant une viscosité de 750mPa.s, ci-après huile SiOH.

Par ailleurs, les quantités voulues de complexe d'iridium [IrClCod]₂ sont pesées dans un flacon de 30ml muni d'un agitateur magnétique, puis diluées avec une faible quantité de toluène désulfurisé (0.5ml). Après 10 minutes d'agitation, la quantité nécessaire du mélange d'huiles silicone préformé est ajoutée à cette solution. Les mesures de temps débutent à ce moment, en même temps que l'agitation magnétique démarre.

Après agitation à température ambiante, le temps de prise en masse (réticulation) est mesuré.

Les conditions et le résultat sont regroupés dans le tableau 1.

**TABLEAU 1 - RESULTATS**

| | [IrClCod]₂ | Ligand Σ_{d} | | Huile SiOH (g) | Huile SiH (g) | Ratio molaire | | | Réticulation |
|---|---|---|---|---|---|---|---|---|---|
| | (mg) | Nature | (mg) | | | Σ*_{d}* /Ir | SiH/ SiOH | Ir/ SiOH | Temp. ambiante |
| Contre -Ex 1 | 2.2 | - | 0 | 11.1 | 0.19 | - | 2 | 4.2x10⁻³ | NR* |
| Ex 1 | 4.7 | 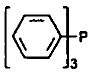 | 3.8 | 23.5 | 0.4 | 1 | 2 | 4.2x10⁻³ | 2 min |
| Ex 2 | 3.5 | 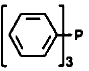 | 5.6 | 17.5 | 0.3 | 2 | 2 | 4.2x10⁻³ | 1h |
| Ex 3 | 5 | 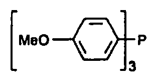 | 4.3 | 25 | 0.43 | 1 | 2 | 4.2x10⁻³ | 2 min |
| Ex 4 | 4.8 | 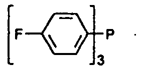 | 4.3 | 24 | 0.41 | 1 | 2 | 4.2x10⁻³ | 2 min |
| Ex 5 | 3.9 | 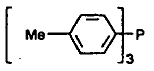 | 3.5 | 19.5 | 0.34 | 1 | 2 | 4.2x10⁻³ | 4 min |
| Ex 6 | 3.4 | 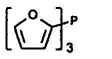 | 2.5 | 17 17.5 | 0.29 | 1.1 | 2 | 4.2x10⁻³ | 7 min |
| Ex 7 | 3.5 | 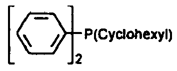 | 2.7 | 17.5 | 0.3 | 1 | 2 | 4.2x10⁻³ | 7 min |
| Ex 8 | 4 | 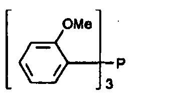 | 4.0 | 20 | 0.34 | 1 | 2 | 4.2x10⁻³ | 12 min |
| Ex 9 | 3.5 | 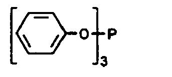 | 3.0 | 17.5 | 0.3 | 1 | 2 | 4.2x10⁻³ | 18min |
| Ex 10 | 3.5 | 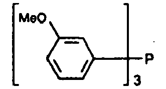 | 3.5 | 17.5 | 0.3 | 1 | 2 | 4.2x10⁻³ | 3 min |

| | | | | | | | | | |
|---|---|---|---|---|---|---|---|---|---|
| * NR : Pas de réticulation après 6h d'agitation à t.a. | | | | | | | | | |

Il doit être bien compris que l'invention définie par les revendications annexées n'est pas limitée aux modes de réalisation particuliers indiqués dans la description ci-dessus, mais en englobe les variantes qui ne sortent ni du cadre ni de l'esprit de la présente invention.

## Revendications

1. Composition silicone réticulable par déshydrogéno-condensation, cette composition comprenant :
o -A- au moins un monomère, oligomère et/ou polymère organosiloxane ayant, par molécule, au moins un motif réactif ≡SiH ;
o -B- au moins un monomère, oligomère et/ou polymère organosiloxane présentant, par molécule, au moins un motif réactif ≡SiOH ;
o -C- au moins un complexe catalytique ;
o -D- éventuellement au moins un inhibiteur ou retardateur de réticulation ;
o -E- éventuellement au moins une résine polyorganosiloxane (POS) ;
o -F- éventuellement au moins une charge ;
**caractérisée en ce que** le complexe catalytique -C- est un complexe de l'iridium susceptible d'être obtenu en faisant réagir ensemble :
-C1- d'une part un complexe de l'iridium de formule (I) :
**(IrΣΣ'₂)ₙ**
dans laquelle :
1/ n est 1 ou 2 et:
- si n est 1, E est un ligand LX radicalaire à 3 électrons, de préférence un ligand dérivé de l'acétylacétone, d'un β-cétoester, d'un ester malonique, d'un composé allylé, d'un carbamate, d'un dithiocarbamate, d'un acide carboxylique ;
- si n est 2, Σ est un ligand radicalaire X à 1 électron pontant les 2 atomes d'iridium, ayant une fonction de ligand X à 1 électron pour 1 atome d'iridium et de ligand LX à 3 électrons pour l'ensemble des 2 atomes d'iridium, notamment un ligand choisi parmi les halogéno, alcoxy, aryloxy.
2/ Σ', identiques ou différents, représentent chacun un ligand L à 2 électrons, choisi notamment parmi : les donneurs d'un doublet de liaison π, tels que oléfines, alcynes, doubles liaisons C=O d'un aldéhyde ou d'une cétone, C=N, C=S ; les donneurs d'un doublet de liaison σ, tels que les liaisons H-H (dihydrogène), les liaisons H-Si notamment dans les silanes (H-SiR₃) ; et les ligands organophosphorés, R₂O, R₂S, NR₃, THF ;
-C2- d'autre part un ligand Σ_{d} choisi parmi R₂S, R₂O, NR₃, les carbènes, les organophosphorés de formule P(OR)ₚ(R)_{q} avec p et q allant de 0 à 3, sachant que p+q = 3.

2. Composition selon la revendication 1, **caractérisée en ce que** n=2 et le complexe de l'iridium est un complexe dimère de formule (I') suivante : 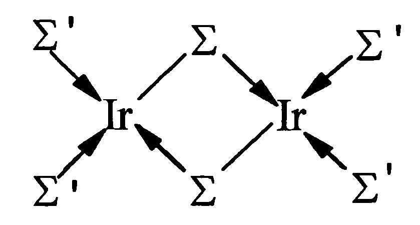 dans laquelle
- E est un ligand radicalaire X à 1 électron pontant les 2 atomes d'iridium, ayant une fonction de ligand X à 1 électron pour 1 atome d'iridium et de ligand LX à 3 électrons pour l'ensemble des 2 atomes d'iridium, notamment un ligand choisi parmi les halogéno, alcoxy, aryloxy.
- Σ' sont des ligands L à 2 électrons formés de groupes hydrocarbonés comprenant au moins un motif 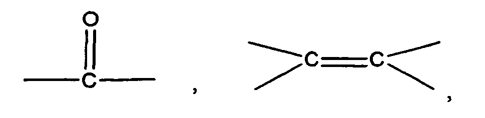 de préférence de groupes hydrocarbonés comprenant le second motif, plus préférentiellement avec les deux Σ' portés par le même atome Ir étant portés par la même molécule.

3. Composition selon la revendication 1, **caractérisée en ce que** n est 1 et Σ est choisi parmi les ligands acétylacétonato, allyle, cyclopropényle, carboxylato, carbamato, dithiocarbamato, plus particulièrement acétylacétonato et allyle, de préférence acétylacétonato.

4. Composition selon la revendication 1 ou 2, **caractérisée en ce que** n est 2 et E est un ligand choisi parmi halogéno, plus particulièrement chloro, et alcoxy.

5. Composition selon l'une des revendications 1 à 4, **caractérisée en ce que** les ligands Σ', identiques ou différents, de préférence identiques, représentent chacun un ligand L à 2 électrons choisi parmi les groupes hydrocarbonés comprenant au moins un motif 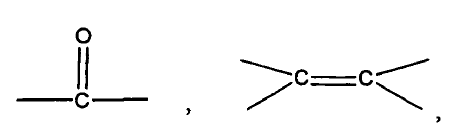 les groupes hydrocarbonés étant linéaires, ramifiés, aromatiques ou (poly)cycliques, éventuellement interrompus par un ou plusieurs hétéroatomes (e.g. O, S, N), et comportant de 2 à 18 C.

6. Composition selon la revendication 5, **caractérisée en ce que** les deux ligands Σ' liés au même atome Ir sont des fonctionalités portées par une même molécule.

7. Composition selon la revendication 6, **caractérisée en ce que** cette molécule est le 1,5-cyclooctadiène.

8. Composition selon l'une des revendications 1 à 4, **caractérisée en ce que** les ligands E' sont de type P(OR)ₚ(R)_{q} avec p et q allant de 0 à 3, sachant que p+q = 3, de préférence phosphines PR₃ et phosphites P(OR)₃.

9. Composition selon l'une des revendications précédentes, **caractérisée en ce que** le ligand Σ*_{d}* est un organophosphoré de formule P(OR)ₚ(R)_{q} avec p et q allant de 0 à 3, sachant que p+q = 3, de préférence une phosphine PR₃ ou une phosphite P(OR)₃ ; formules dans lesquelles les radicaux R, identiques ou différents, sont des radicaux alkyle linéaires ou ramifiés, ayant notamment de 1 à 30 C, de préférence de 1 à 12 C ; des radicaux alkyle comportant un ou plusieurs cycles, notamment 1 ou 2, un cycle pouvant avoir notamment de 4 à 14 C, de préférence de 5 à 8 C ; des radicaux aryle ou aralkyle, comprenant un ou plusieurs cycles aromatiques ou hétéroaromatiques accolés ou non accolés, notamment 1 ou 2 cycles, un cycle pouvant comprendre de 4 à 14 C, de préférence de 5 à 8 C ; le ou les cycles sont éventuellement substitué(s) par un ou plusieurs, notamment de 1 à 2, groupes tels que alcoxy, halogénure, amino, alkyles linéaires ou ramifiés, ayant notamment de 1 à 12 C, de préférence de 4 à 12 C.

10. Composition selon l'une des revendications 1-2 et 4-9, **caractérisée en ce que** n=2 et le complexe dimère de l'iridium est le dichlorure de bis(1,5-cyclooctadiène)diiridium(I).

11. Composition selon l'une des revendications 1 à 10, **caractérisée en ce que** le ligand Σ*_{d}* est choisi dans le groupe consistant en triphénylphosphine et tris(paraméthoxyphényl)phosphine.

12. Composition selon la revendication 1, **caractérisée en ce que** le complexe catalytique -C- est le produit du mélange du dichlorure de bis(1,5-cyclooctadiène)diiridium(I) et de la triphénylphosphine.

13. Composition selon l'une quelconque des revendications précédentes, **caractérisée en ce qu'**elle comprend de 1 ppm à 1000 ppm, de préférence de 1 ppm à 300 ppm d'iridium métal par rapport à la masse constituée par le mélange des huiles à ≡SiH et ≡SiOH.

14. Composition selon l'une quelconque des revendications précédentes, **caractérisée en ce que** le complexe catalytique emploie de 0,5 à 10, en particulier de 0,5 à 5, plus particulièrement de 0,5 à 2 moles de ligand Σ*_{d}* pour 1 mole d'Ir.

15. Composition selon la revendication 14, **caractérisée en ce que** le complexe catalytique emploie de 0,75 à 1,5, notamment de 0,75 à 1,25 et mieux encore 1 mole de ligand Σ*_{d}* pour 1 mole d'Ir.

16. Composition selon l'une quelconque des revendications précédentes, **caractérisée en ce que** les monomères, oligomères et/ou polymères organosiloxanes -A- à motifs réactifs ≡SiH possèdent au moins un motif de formule (II) et sont terminés par des motifs de formule (III) ou cycliques constitués de motifs de formule (II) représentées ci-dessous : 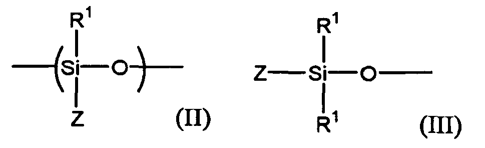 dans lesquelles :
- les symboles R¹, identiques ou différents et représentent :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone éventuellement substitué,
· une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z sont semblables ou différents et représentent :
· un radical hydrogène,
· un groupement répondant à la même définition que celle donnée ci-dessus pour R¹, avec, par molécule, au moins des symboles Z représentant H.

17. Composition selon l'une des revendications précédentes, **caractérisée en ce que** les monomères, oligomères et/ou polymères organosiloxanes -B-à motifs réactifs ≡SiOH possèdent au moins un motif de formule (IV) et sont terminés par des motifs de formule (V) ou cycliques constitués de motifs de formule (IV) représentées ci-dessous : 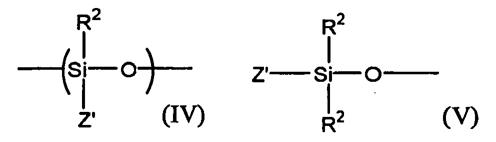 dans lesquelles :
- les symboles R², identiques ou différents et représentent :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone éventuellement substitué,
· une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z' sont semblables ou différents et représentent :
■ un groupement hydroxyle,
■ un groupement répondant à la même définition que celle ci-dessus pour R²,
avec, par molécule, au moins un des symboles Z' représentant OH.

18. Composition selon l'une des revendications précédentes, **caractérisée en ce que** les monomères, oligomères, polymères organosiloxanes -A-à motif réactif ≡SiH répondent à la formule générale (VI) : 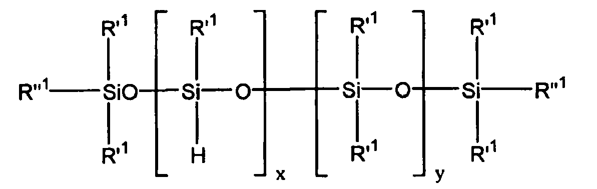 dans laquelle :
- x et y représentent chacun un nombre entier ou fractionnaire variant entre 0 et 200
- R'¹ et R"¹ représentent indépendamment l'un de l'autre :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone éventuellement substitué,
· une partie aralkyle ayant une partie alkyle contenant entre 5 et 14 atomes de carbone et une partie aryle contenant entre 6 et 12 atomes de carbone, substituée éventuellement-sur la partie aryle,
- R"¹ pouvant également correspondre à l'hydrogène, avec la condition selon laquelle au moins l'un des radicaux R"¹ (de préférence les deux) correspondent à l'hydrogène quand x = 0.

19. Composition selon l'une des revendications précédentes, **caractérisée en ce que** les monomères, oligomères, polymères organosiloxanes -B- à motif réactif ≡SiOH répondent à la formule générale (VII) : 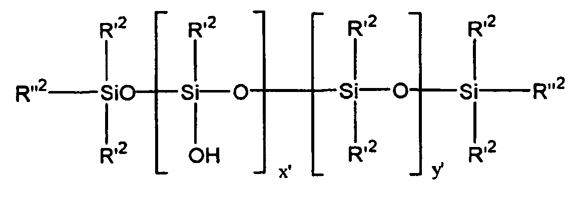 dans laquelle :
- x' et y' représente chacun un nombre entier ou fractionnaire variant entre 0 et 1200,
- R'² et R"² représentent indépendamment l'un de l'autre :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone éventuellement substitué,
· une partie aralkyle ayant une partie alkyle contenant entre 5 et 14 atomes de carbone et une partie aryle contenant entre 6 et 12 atomes de carbone, substituée éventuellement-sur la partie aryle,
- R"² pouvant également correspondre à OH, avec la condition selon laquelle au moins l'un des radicaux R"² (de préférence les deux) correspondent à OH quand x'=0.

20. Composition selon l'une des revendications précédentes, **caractérisée en ce que** les monomères, oligomères, polymères organosiloxanes à motif réactif ≡SiH comportent de 1 à 50 motifs ≡SiH actifs par molécule.

21. Composition selon l'une des revendications précédentes, **caractérisée en ce que** les monomères, oligomères, polymères organosiloxanes à motif réactif ≡SiOH comportent de 1 à 50 motifs ≡SiOH actifs par molécule.

22. Composition selon l'une des revendications précédentes, **caractérisée en ce que** les monomères, oligomères, polymères organosiloxanes -A- à motif réactif ≡SiH réactif sont choisis parmi les composés de formule : 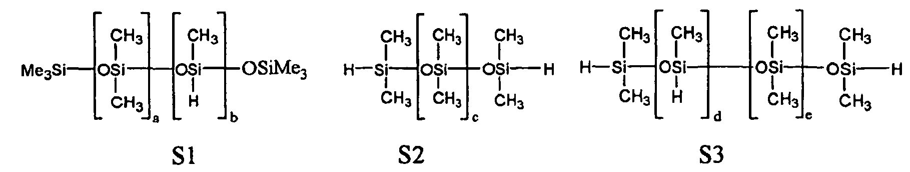 avec a, b, c, d et e représentant un nombre variant de :
- dans le polymère de formule S1 :
0 ≤ a ≤ 150 de préférence 0 ≤ a ≤ 100 de préférence 0 ≤ a ≤ 20, et
1 ≤ b ≤ 55 de préférence 10 ≤ b ≤ 55 de préférence 30 ≤ b ≤ 55
- dans le polymère de formule S2 :
0 ≤ c ≤ 15
- dans le polymère de formule S3 :
5 ≤ d ≤ 200 de préférence 20 ≤ d ≤ 50, et
2 ≤ e ≤ 50 de préférence 10 ≤ e ≤ 30

23. Composition selon l'une des revendications précédentes, **caractérisée en ce que** les monomères, oligomères, polymères organosiloxanes -B-à motif réactif ≡SiOH réactif sont choisis parmi les composés de formule 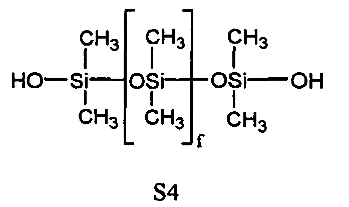 avec 1 ≤ f ≤ 1200 de préférence 50 ≤ f ≤ 400 de préférence 150 ≤ f ≤ 250.

24. Composition selon l'une des revendications précédentes, **caractérisée en ce que** le ratio ≡SiH/≡SiOH est compris entre 1 et 100, de préférence entre 10 et 50 et, plus préférentiellement encore entre 15 et 45.

25. Procédé pour polymériser et/ou réticuler une composition selon l'une quelconque des revendications précédentes, **caractérisé en ce que** l'on effectue une déshydrogénocondensation entre lesdits composés -A- et -B- et **en ce que** ladite déshydrogénocondensation est initiée par thermoactivation du complexe catalytique -C-.

26. Procédé de réalisation d'au moins un revêtement anti-adhérent sur un support - de préférence souple -, **caractérisé en ce qu'**il comprend l'application sur ce support d'une composition selon l'une quelconque des revendications 1 à 24, puis à faire en sorte que la réticulation intervienne.

27. Procédé de réalisation d'au moins un article en mousse silicone réticulée, **caractérisé en ce qu'**il comprend l'application sur ce support d'une composition selon l'une quelconque des revendications 1 à 24, puis à faire en sorte que la réticulation intervienne.

28. Procédé de préparation d'un polyorganosiloxanes branché comprenant au moins deux chaînes polyorganosiloxanes reliées entre elles par un groupement siloxyle Si-O-Si dans lequel on effectue une réaction de déshydrogénocondensation entre un monomère, oligomère ou polymère organosiloxane A' comprenant des motifs réactifs ≡SiH et un monomère, oligomère ou polymère organosiloxane B' comprenant des motifs réactifs ≡SiOH **caractérisé en ce que** ladite réaction de déshydrogénocondensation est effectuée en présence du complexe catalytique C défini selon l'une des revendications 1 à 15 et éventuellement initiée par thermoactivation.

29. Procédé de préparation d'un polyorganosiloxanes branché selon la revendication 28 dans lequel le ratio ≡SiH/≡SiOH est supérieur à 1.

## Claims

1. Silicone composition which can be crosslinked by dehydrogenative condensation, this composition comprising:
o -A- at least one organosiloxane monomer, oligomer and/or polymer having, per molecule, at least one reactive ≡SiH unit;
o -B- at least one organosiloxane monomer, oligomer and/or polymer exhibiting, per molecule, at least one reactive ≡SiOH unit;
o -C- at least one catalytic complex;
o -D- optionally at least one crosslinking inhibitor or retarder;
o -E- optionally at least one polyorganosiloxane (POS) resin;
o -F- optionally at least one filler;
**characterized in that** the catalytic complex -C- is an iridium complex capable of being obtained by reacting together:
-C1-, on the one hand, an iridium complex of formula (I):
**(IrΣΣ'₂)ₙ**
in which:
1/ n is 1 or 2 and:
- if n is 1, Σ is a 3-electron radical ligand LX, preferably a ligand derived from acetylacetone, from a β-keto ester, from a malonic ester, from an allyl compound, from a carbamate, from a dithiocarbamate or from a carboxylic acid;
- if n is 2, Σ is a 1-electron radical ligand X which bridges the 2 iridium atoms, having a function of 1-electron ligand X for 1 iridium atom and of 3-electron ligand LX for the combination of the 2 iridium atoms, in particular a ligand chosen from halo, alkoxy or aryloxy;
2/ Σ', which are identical or different, each represent a 2-electron ligand L chosen in particular from: donors of a π bond pair, such as olefins, alkynes, C=O double bonds of an aldehyde or of a ketone, C=N or C=S; donors of a σ bond pair, such as H-H (dihydrogen) bonds or H-Si bonds, in particular in silanes (H-SiR₃); and organophosphorus, R₂O, R₂S, NR₃ or THF ligands;
- C2-, on the other hand, a ligand Σ_{d} chosen from R₂S, R₂O, NR₃, carbenes or organophosphorus compounds of formula P(OR)ₚ(R)_{q} with p and q ranging from 0 to 3, it being known that p+q = 3.

2. Composition according to Claim 1, **characterized in that** n=2 and the iridium complex is a dimeric complex of following formula (I'): 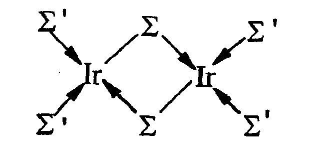 in which:
- Σ is a 1-electron radical ligand X which bridges the 2 iridium atoms, having a function of 1-electron ligand X for 1 iridium atom and of 3-electron ligand LX for the combination of the 2 iridium atoms, in particular a ligand chosen from halo, alkoxy or aryloxy,
- Σ' are 2-electron ligands L formed of hydrocarbon groups comprising at least one unit 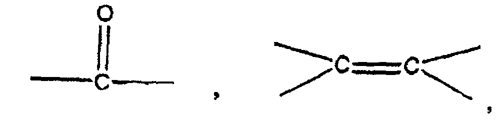 preferably of hydrocarbon groups comprising the second unit, more preferably with the two Σ' ligands carried by the same Ir atom being carried by the same molecule.

3. Composition according to Claim 1, **characterized in that** n is 1 and Σ is chosen from the acetylacetonato, allyl, cyclopropenyl, carboxylato, carbamato or dithiocarbamato ligands, more particularly the acetylacetonato and allyl ligands, preferably the acetylacetonato ligand.

4. Composition according to Claim 1 or 2, **characterized in that** n is 2 and Σ is a ligand chosen from halo, more particularly chloro, and alkoxy.

5. Composition according to one of Claims 1 to 4, **characterized in that** the Σ' ligands, which are identical or different, preferably identical, each represent a 2-electron ligand L chosen from hydrocarbon groups comprising at least one unit 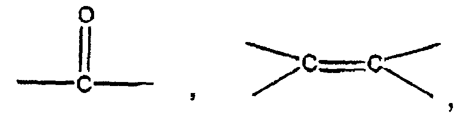 the hydrocarbon groups being linear, branched, aromatic or (poly) cyclic, optionally interrupted by one or more heteroatoms (e.g., O, S or N) and comprising from 2 to 18 carbon atoms.

6. Composition according to Claim 5, **characterized in that** the two Σ' ligands bonded to the same Ir atom are functionalities carried by the same molecule.

7. Composition according to Claim 6, **characterized in that** this molecule is 1,5-cyclooctadiene.

8. Composition according to one of Claims 1 to 4, **characterized in that** the Σ' ligands are of P(OR)ₚ(R)_{q} type with p and q ranging from 0 to 3, it being known that p+q = 3, preferably phosphines PR₃ and phosphites P(OR)₃.

9. Composition according to one of the preceding claims, **characterized in that** the ligand Σ_{d} is an organophosphorus compound of formula P(OR)ₚ(R)_{q} with p and q ranging from 0 to 3, it being known that p+q = 3, preferably a phosphine PR₃ or a phosphite P(OR)₃; in which formulae the R radicals, which are identical or different, are linear or branched alkyl radicals having in particular from 1 to 30 carbon atoms, preferably from 1 to 12 carbon atoms; alkyl radicals comprising one or more rings, in particular 1 or 2 rings, it being possible for a ring to have in particular from 4 to 14 carbon atoms, preferably from 5 to 8 carbon atoms; or aryl or aralkyl radicals comprising one or more fused or nonfused aromatic or heteroaromatic rings, in particular 1 or 2 rings, it being possible for a ring to comprise from 4 to 14 carbon atoms, preferably from 5 to 8 carbon atoms; the ring or rings are optionally substituted by one or more groups, in particular from 1 to 2 groups, such as alkoxy, halide, amino or linear or branched alkyl having in particular from 1 to 12 carbon atoms, preferably from 4 to 12 carbon atoms.

10. Composition according to one of Claims 1-2 and 4-9, **characterized in that** n=2 and the dimeric iridium complex is bis(1,5-cyclooctadiene)diiridium(I) dichloride.

11. Composition according to one of Claims 1 to 10, **characterized in that** the ligand Σ_{d} is chosen from the group consisting of triphenylphosphine and tris(para-methoxyphenyl)phosphine.

12. Composition according to Claim 1, **characterized in that** the catalytic complex -C- is the product of the mixing of bis(1,5-cyclooctadiene)di-iridium(I) dichloride and of triphenylphosphine.

13. Composition according to any one of the preceding claims, **characterized in that** it comprises from 1 ppm to 1000 ppm, preferably from 1 ppm to 300 ppm, of iridium metal with respect to the body composed of the mixture of the oils possessing ≡SiH and ≡SiOH.

14. Composition according to any one of the preceding claims, **characterized in that** the catalytic complex employs from 0.5 to 10, especially from 0.5 to 5, more particularly from 0.5 to 2, mol of ligand Σ_{d} per 1 mol of Ir.

15. Composition according to Claim 14, **characterized in that** the catalytic complex employs from 0.75 to 1.5, in particular from 0.75 to 1.25 and better still 1 mol of ligand Σ_{d} per 1 mol of Ir.

16. Composition according to any one of the preceding claims, **characterized in that** the organosiloxane monomers, oligomers and/or polymers -A-possessing reactive ≡SiH units have at least one unit of formula (II) and are terminated by units of formula (III) or are cyclic and are composed of units of formula (II) represented below: 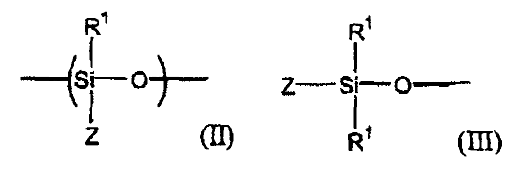 in which:
- the symbols R¹ are identical or different and represent:
• a linear or branched alkyl radical comprising from 1 to 8 carbon atoms which is optionally substituted by at least one halogen, preferably fluorine, the alkyl radicals preferably being methyl, ethyl, propyl, octyl and 3,3,3-trifluoropropyl,
• an optionally substituted cycloalkyl radical comprising between 5 and 8 cyclic carbon atoms,
• an optionally substituted aryl radical comprising between 6 and 12 carbon atoms,
• an aralkyl radical having an alkyl part comprising between 5 and 14 carbon atoms and an aryl part comprising between 6 and 12 carbon atoms which is optionally substituted on the aryl part by halogens, alkyls and/or alkoxyls comprising from 1 to 3 carbon atoms,
- the symbols Z are alike or different and represent:
• a hydrogen radical,
• a group corresponding to the same definition as that given above for R¹,
with, per molecule, at least one of the symbols Z representing H.

17. Composition according to one of the preceding claims, **characterized in that** the organosiloxane monomers, oligomers and/or polymers -B- possessing reactive ≡SiOH units have at least one unit of formula (IV) and are terminated by units of formula (V) or are cyclic and are composed of units of formula (IV) represented below: 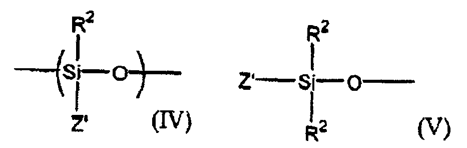 in which:
- the symbols R² are identical or different and represent:
• a linear or branched alkyl radical comprising from 1 to 8 carbon atoms which is optionally substituted by at least one halogen, preferably fluorine, the alkyl radicals preferably being methyl, ethyl, propyl, octyl and 3,3,3-trifluoropropyl,
• an optionally substituted cycloalkyl radical comprising between 5 and 8 cyclic carbon atoms,
• an optionally substituted aryl radical comprising between 6 and 12 carbon atoms,
• an aralkyl radical having an alkyl part comprising between 5 and 14 carbon atoms and an aryl part comprising between 6 and 12 carbon atoms which is optionally substituted on the aryl part by halogens, alkyls and/or alkoxyls comprising from 1 to 3 carbon atoms,
- the symbols Z' are alike or different and represent:
• a hydroxyl group,
• a group corresponding to the same definition as that given above for R²,
with, per molecule, at least one of the symbols Z' representing OH.

18. Composition according to one of the preceding claims, **characterized in that** the organosiloxane monomers, oligomers or polymers -A- possessing reactive ≡SiH units correspond to the general formula (VI): 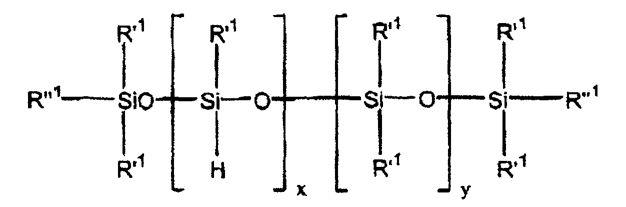 in which:
- x and y each represent an integer or fractional number varying between 0 and 200,
- R'¹ and R"¹ represent, independently of one another:
• a linear or branched alkyl radical comprising from 1 to 8 carbon atoms which is optionally substituted by at least one halogen, preferably fluorine, the alkyl radicals preferably being methyl, ethyl, propyl, octyl and 3,3,3-trifluoropropyl,
• an optionally substituted cycloalkyl radical comprising between 5 and 8 cyclic carbon atoms,
• an optionally substituted aryl radical comprising between 6 and 12 carbon atoms,
• an aralkyl radical having an alkyl part comprising between 5 and 14 carbon atoms and an aryl part comprising between 6 and 12 carbon atoms which is optionally substituted on the aryl part,
- it being possible for R"¹ also to correspond to hydrogen, with the condition according to which at least one of the R"¹ radicals (preferably both) correspond to hydrogen when x = 0.

19. Composition according to one of the preceding claims, **characterized in that** the organosiloxane monomers, oligomers or polymers -B- possessing reactive ≡SiOH units correspond to the general formula (VII): 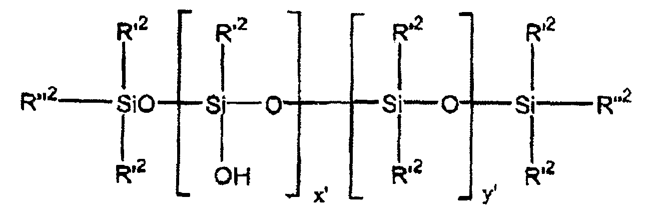 in which:
- x' and y' each represent an integer or fractional number varying between 0 and 1200,
- R'² and R"² represent, independently of one another:
• a linear or branched alkyl radical comprising from 1 to 8 carbon atoms which is optionally substituted by at least one halogen, preferably fluorine, the alkyl radicals preferably being methyl, ethyl, propyl, octyl and 3,3,3-trifluoropropyl,
• an optionally substituted cycloalkyl radical comprising between 5 and 8 cyclic carbon atoms,
• an optionally substituted aryl radical comprising between 6 and 12 carbon atoms,
• an aralkyl radical having an alkyl part comprising between 5 and 14 carbon atoms and an aryl part comprising between 6 and 12 carbon atoms which is optionally substituted on the aryl part,
- it being possible for R"² also to correspond to OH, with the condition according to which at least one of the R"² radicals (preferably both) correspond to OH when x' = 0.

20. Composition according to one of the preceding claims, **characterized in that** the organosiloxane monomers, oligomers or polymers possessing reactive ≡SiH units comprise from 1 to 50 active ≡SiH units per molecule.

21. Composition according to one of the preceding claims, **characterized in that** the organosiloxane monomers, oligomers or polymers possessing reactive ≡SiOH units comprise from 1 to 50 active ≡SiOH units per molecule.

22. Composition according to one of the preceding claims, **characterized in that** the organosiloxane monomers, oligomers or polymers -A- possessing reactive ≡SiH units are chosen from the compounds of formulae: 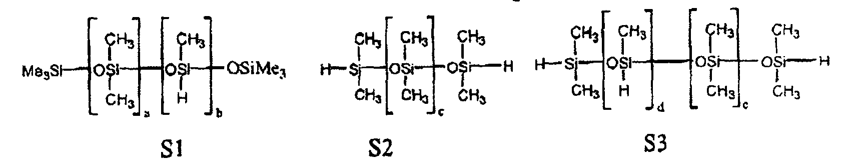 with a, b, c, d and e representing a number varying from:
- in the polymer of formula S1:
0 ≤ a ≤ 150, preferably 0 ≤ a ≤ 100, preferably 0 ≤ a ≤ 20, and
1 ≤ b ≤ 55, preferably 10 ≤ b ≤ 55, preferably 30 ≤ b ≤ 55,
- in the polymer of formula S2:
0 ≤ c ≤ 15,
- in the polymer of formula S3:
5 ≤ d ≤ 200, preferably 20 ≤ d ≤ 50, and
2 ≤ e ≤ 50, preferably 10 ≤ e ≤ 30.

23. Composition according to one of the preceding claims, **characterized in that** the organosiloxane monomers, oligomers or polymers -B- possessing reactive ≡SiOH units are chosen from the compounds of formula: 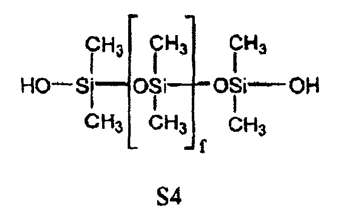 with 1 ≤ f ≤ 1200, preferably 50 ≤ f ≤ 400, preferably 150 ≤ f ≤ 250.

24. Composition according to one of the preceding claims, **characterized in that** the ≡SiH/≡SiOH ratio is between 1 and 100, preferably between 10 and 50 and more preferably still between 15 and 45.

25. Process for polymerizing and/or crosslinking a composition according to any one of the preceding claims, **characterized in that** a dehydrogenative condensation is carried out between said compounds -A- and -B- and **in that** said dehydrogenative condensation is initiated by thermal activation of the catalytic complex -C-.

26. Process for producing at least one release coating on a support, preferably a flexible support, **characterized in that** it comprises the application, to this support, of a composition according to any one of Claims 1 to 24 and then ensuring that crosslinking occurs.

27. Process for producing at least one article made of crosslinked silicone foam, **characterized in that** it comprises applying, to this support, a composition according to any one of Claims 1 to 24 and then ensuring that crosslinking occurs.

28. Process for the preparation of a branched polyorganosiloxane comprising at least two polyorganosiloxane chains connected to one another via an Si-O-Si siloxyl group in which a dehydrogenative condensation reaction is carried out between an organosiloxane monomer, oligomer or polymer A' comprising reactive ≡SiH units and an organosiloxane monomer, oligomer or polymer B' comprising reactive ≡SiOH units, **characterized in that** said dehydrogenative condensation reaction is carried out in the presence of the catalytic complex C defined according to one of Claims 1 to 15 and is optionally initiated by thermal activation.

29. Process for the preparation of a branched polyorganosiloxane according to Claim 28, in which the ≡SiH/≡SiOH ratio is greater than 1.

## Patentansprüche

1. Silicon-Zusammensetzung, vernetzbar durch Dehydrokondensation, wobei diese Zusammensetzung umfasst:
o -A- mindestens ein Organosiloxan-Monomer, -Oligomer und/ oder -Polymer, das pro Molekül mindestens eine reaktive Struktureinheit ≡SiH besitzt;
o -B- mindestens ein Organosiloxan-Monomer, -Oligomer und/oder -Polymer, das pro Molekül mindestens eine reaktive Struktureinheit ≡SiOH besitzt;
o -C- mindestens einen katalytischen Komplex;
o -D- gegebenenfalls mindestens einen Inhibitor oder Verzögerer der Vernetzung;
o -E- gegebenenfalls mindestens ein Polyorganosiloxan-Harz (POS);
o -F- gegebenenfalls mindestens einen Füllstoff;
**dadurch gekennzeichnet, dass** der katalytische Komplex -C- ein Iridium-Komplex ist, der geeignet ist, erhalten zu werden, indem zusammen reagieren:
-C1- einerseits ein Iridium-Komplex der Formel (I)
**(Ir**∑∑**'₂)ₙ** (I)
in der
1/ n gleich 1 oder 2 ist und:
- wenn n gleich 1 ist, ∑ einen radikalischen Liganden LX mit drei Elektronen darstellt, vorzugsweise einen Liganden, der abgeleitet ist von Acetylaceton, einem β-Ketoester, einem Malonsäureester, einer Allyl-Verbindung, einem Carbamat, einem Dithiocarbamat, einer Carbonsäure;
- wenn n gleich 2 ist, ∑ einen radikalischen Liganden X mit einem Elektron darstellt, der die zwei Iridiumatome als Brücke verbindet und eine Funktion des Liganden X mit einem Elektron für ein Iridiumatom und den Liganden LX mit drei Elektronen für die Gesamtheit der zwei Iridiumatome besitzt, insbesondere einen Liganden, der unter Halogen, Alkoxy, Aryloxy ausgewählt wird;
2/ ∑', gleich oder verschieden, jeweils einen Liganden L mit zwei Elektronen darstellen, insbesondere ausgewählt unter: den Donatoren eines Dubletts der Bindung π wie Olefine, Alkine, Doppelbindungen C=O von einem Aldehyd oder einem Keton, C=N, C=S; den Donatoren eines Dubletts der Bindung σ wie die Bindungen H-H (Di-hydrogen), die Bindungen H-Si, insbesondere in den Silanen (H-SiR₃) ; und den Organophosphor-Liganden, R₂O, R₂S, NR₃, THF;
-C2- andererseits ein Ligand ∑_{d}, ausgewählt unter R₂S, R₂O, NR₃, den Carbenen, den Organophosphor-Verbindungen der Formel P(OR)ₚ(R)_{q} mit p und q, die von 0 bis 3 reichen und der Kenntnis, dass p+q=3 ist.

2. Zusammensetzung nach Anspruch 1, **dadurch gekennzeichnet, dass** n=2 ist und der Iridium-Komplex einen dimeren Komplex der folgenden Formel (I') 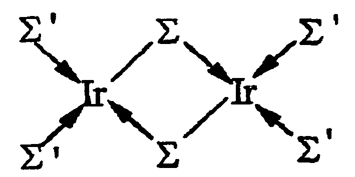 bedeutet, in der
- ∑ einen radikalischen Liganden X mit einem Elektron darstellt, der die zwei Iridiumatome als Brücke verbindet und eine Funktion des Liganden X mit einem Elektron für ein Iridiumatom und des Liganden LX mit drei Elektronen für die Gesamtheit der zwei Iridiumatome besitzt, insbesondere einen Liganden, der unter Halogen, Alkoxy, Aryloxy ausgewählt wird,
- ∑' Liganden L mit zwei Elektronen darstellen, gebildet von Kohlenwasserstoff-Gruppen, die mindestens eine Struktureinheit 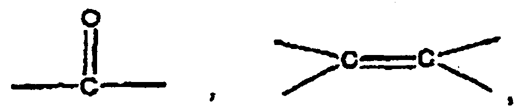 umfassen, vorzugsweise Kohlenwasserstoff-Gruppen, welche die zweite Struktureinheit umfassen, und noch mehr bevorzugt mit den beiden ∑', getragen durch das gleiche Iridiumatom, das seinerseits durch das gleiche Molekül getragen wird.

3. Zusammensetzung nach Anspruch 1, **dadurch gekennzeichnet, dass** n gleich 1 ist und ∑ ausgewählt wird unter den Liganden Acetylacetonato, Allyl, Cyclopropenyl, Carboxylato, Carbamato, Dithiocarbamato, ganz besonders Acetylacetonato und Allyl, vorzugsweise Acetylacetonato.

4. Zusammensetzung nach Anspruch 1 oder 2, **dadurch gekennzeichnet, dass** n gleich 2 ist und ∑ einen Liganden darstellt, ausgewählt unter Halogen, ganz besonders Chlor, und Alkoxy.

5. Zusammensetzung nach einem der Ansprüche 1 bis 4, **dadurch gekennzeichnet, dass** die Liganden ∑', gleich oder verschieden, vorzugsweise gleich, jeweils einen Liganden L mit zwei Elektronen darstellen, ausgewählt unter den Kohlenwasserstoff-Gruppen, die mindestens eine Struktureinheit 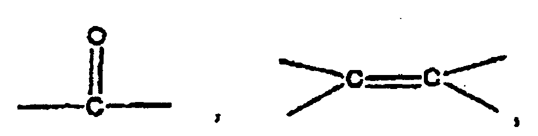 umfassen, wobei die Kohlenwasserstoff-Gruppen linear, verzweigt, aromatisch oder (poly)cyclisch sind, gegebenenfalls unterbrochen durch ein oder mehrere Heteroatome (beispielsweise O, S, N), und 2 bis 18 Kohlenstoffatome umfassen.

6. Zusammensetzung nach Anspruch 5, **dadurch gekennzeichnet, dass** die beiden Liganden ∑', die an das gleiche Iridiumatom gebunden sind, Funktionalitäten darstellen, die durch ein gleiches Molekül getragen werden.

7. Zusammensetzung nach Anspruch 6, **dadurch gekennzeichnet, dass** dieses Molekül 1,5-Cyclooctadien ist.

8. Zusammensetzung nach einem der Ansprüche 1 bis 4, **dadurch gekennzeichnet, dass** die Liganden ∑' vom Typ P(OR)ₚ(R)_{q} sind, mit p und q, die von 0 bis 3 reichen und der Kenntnis, dass p+q=3 ist, vorzugsweise Phosphine PR₃ und Phosphite P(OR)₃.

9. Zusammensetzung nach einem der vorstehenden Ansprüche, **dadurch gekennzeichnet, dass** der Ligand ∑_{d}, eine Organophosphor-Verbindung der Formel P(OR)ₚ(R)_{q} ist, mit p und q, die von 0 bis 3 reichen und der Kenntnis, dass p+q=3 ist, vorzugsweise ein Phosphin PR₃ oder ein Phosphit P(OR)₃; wobei in den Formeln die Reste R, gleich oder verschieden, lineare oder verzweigte Reste Alkyl, die insbesondere 1 bis 30 Kohlenstoffatome, vorzugsweise 1 bis 12 Kohlenstoffatome besitzen; Reste Alkyl, die ein oder mehrere Ringe umfassen, insbesondere ein oder zwei, wobei ein Ring insbesondere 4 bis 14 Kohlenstoffatome, vorzugsweise 5 bis 8 Kohlenstoffatome umfassen kann; oder Reste Aryl oder Aralkyl sind, umfassend ein oder mehrere aromatische oder heteroaromatische, verbundene oder nicht verbundene Ringe, insbesondere ein oder zwei Ringe, wobei ein Ring 4 bis 14 Kohlenstoffatome, vorzugsweise 5 bis 8 Kohlenstoffatome umfassen kann; und der oder die Ring(e) gegebenenfalls durch eine oder mehrere, insbesondere ein bis zwei Gruppen substituiert ist (sind), wie die Gruppen Alkoxy, Halogenid, Amino, lineares oder verzweigtes Alkyl mit insbesondere 1 bis 12 Kohlenstoffatomen, vorzugsweise 4 bis 12 Kohlenstoffatomen.

10. Zusammensetzung nach einem der Ansprüche 1 bis 2 und 4 bis 9, **dadurch gekennzeichnet, dass** n=2 ist und der dimere Iridium-Komplex Bis-(1,5-Cyclooctadien)-diiridium(I)-dichlorid ist.

11. Zusammensetzung nach einem der Ansprüche 1 bis 10, **dadurch gekennzeichnet, dass** der Ligand ∑_{d} aus der Gruppe gewählt wird, die aus Triphenylphosphin und Tris-(Paramethoxyphenyl)-phosphin besteht.

12. Zusammensetzung nach Anspruch 1, **dadurch gekennzeichnet, dass** der katalytische Komplex -C- das Produkt der Mischung von Bis-(1,5-Cyclooctadien)-diiridium(I)-dichlorid und Triphenylphosphin ist.

13. Zusammensetzung nach irgendeinem der vorstehenden Ansprüche, **dadurch gekennzeichnet, dass** sie 1 ppm bis 1000 ppm, vorzugsweise 1 ppm bis 300 ppm Iridium-Metall umfasst, bezogen auf die aus der Mischung der Öle mit ≡SiH und ≡SiOH bestehenden Masse.

14. Zusammensetzung nach irgendeinem der vorstehenden Ansprüche, **dadurch gekennzeichnet, dass** der katalytische Komplex 0,5 bis 10, insbesondere 0,5 bis 5, und ganz besonders 0,5 bis 2 Mole Ligand ∑_{d} pro Mol Ir verwendet.

15. Zusammensetzung nach Anspruch 14, **dadurch gekennzeichnet, dass** der katalytische Komplex 0,75 bis 1,5 insbesondere 0,75 bis 1,25, und noch besser 1 Mol(e) Ligand ∑_{d} pro Mol Ir verwendet.

16. Zusammensetzung nach irgendeinem der vorstehenden Ansprüche, **dadurch gekennzeichnet, dass** die Organosiloxan-Monomeren, -Oligomeren und/oder -Polymeren -A- mit reaktiven Struktureinheiten ≡SiH mindestens eine Struktureinheit der Formel (II) besitzen und durch Struktureinheiten der Formel (III) oder Ringe, bestehend aus Struktureinheiten der Formel (II), nachstehend dargestellt, terminiert sind: 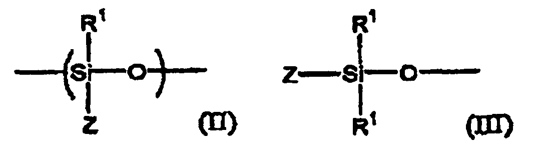 in denen
- die Symbole R¹ gleich oder verschieden sind und darstellen
. einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
. einen Rest Cycloalkyl, enthaltend zwischen 5 und 8 cyclische Kohlenstoffatome, gegebenenfalls substituiert, einen Rest Aryl, enthaltend zwischen 6 und 12 Kohlenstoffatome, gegebenenfalls substituiert,
. einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl durch Halogene, Alkyle und/oder Alkoxyle mit 1 bis 3 Kohlenstoffatomen,
- die Symbole Z ähnlich oder verschieden sind und darstellen:
. einen Wasserstoffrest,
. eine Gruppe, die der gleichen Definition entspricht wie oben bei R¹ angegeben, mit pro Molekül mindestens Symbolen Z, die H darstellen.

17. Zusammensetzung nach einem der vorstehenden Ansprüche, **dadurch gekennzeichnet, dass** die Organosiloxan-Monomeren, -Oligomeren und/oder -Polymeren -B- mit reaktiven Struktureinheiten ≡SiOH mindestens eine Struktureinheit der Formel (IV) besitzen und durch Struktureinheiten der Formel (V) oder Ringe, bestehend aus Struktureinheiten der Formel (IV), nachstehend dargestellt, terminiert sind: 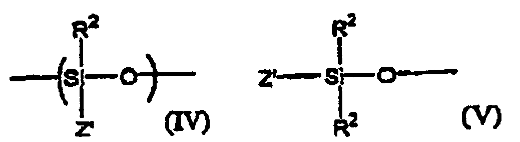 in denen
- die Symbole R² gleich oder verschieden sind und darstellen
. einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
. einen Rest Cycloalkyl, enthaltend zwischen 5 und 8 cyclische Kohlenstoffatome, gegebenenfalls substituiert,
. einen Rest Aryl, enthaltend zwischen 6 und 12 Kohlenstoffatome, gegebenenfalls substituiert,
. einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl durch Halogene, Alkyle und/oder Alkoxyle mit 1 bis 3 Kohlenstoffatomen,
- die Symbole Z' ähnlich oder verschieden sind und darstellen:
. eine Gruppe Hydroxyl,
. eine Gruppe, die der gleichen Definition entspricht wie oben bei R² angegeben,
mit pro Molekül mindestens einem der Symbole Z', die OH darstellen.

18. Zusammensetzung nach einem der vorstehenden Ansprüche, **dadurch gekennzeichnet, dass** die Organosiloxan-Monomeren, -Oligomeren, -Polymeren -A- mit reaktiven Struktureinheiten ≡SiH der allgemeinen Formel (VI) entsprechen: 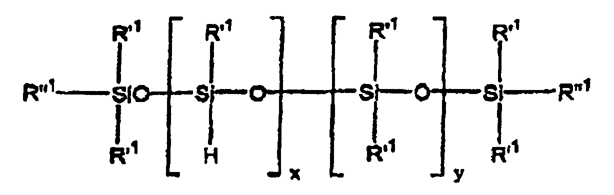 in der
- x und y jeweils eine ganze oder gebrochene Zahl darstellen, die zwischen 0 und 200 variiert,
- R'¹ und R"¹ unabhängig voneinander darstellen:
. einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
. einen Rest Cycloalkyl, enthaltend zwischen 5 und 8 cyclische Kohlenstoffatome, gegebenenfalls substituiert,
. einen Rest Aryl, enthaltend zwischen 6 und 12 Kohlenstoffatome, gegebenenfalls substituiert,
. einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl,
- R"¹ ebenfalls Wasserstoff entsprechen kann, unter der Bedingung, nach der mindestens einer der Reste R"¹ (vorzugsweise beide) Wasserstoff entsprechen, wenn x=0 ist.

19. Zusammensetzung nach einem der vorstehenden Ansprüche, **dadurch gekennzeichnet, dass** die Organosiloxan-Monomeren, -Oligomeren, -Polymeren -B- mit reaktiven Struktureinheiten ≡SiOH der allgemeinen Formel (VII) entsprechen: 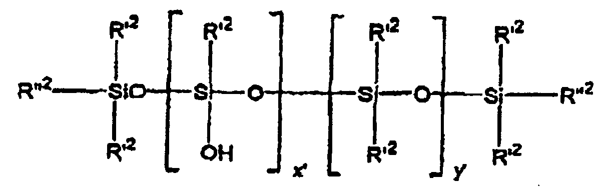 in der
- x' und y' jeweils eine ganze oder gebrochene Zahl darstellen, die zwischen 0 und 1200 variiert,
- R'² und R"² unabhängig voneinander darstellen:
. einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
. einen Rest Cycloalkyl, enthaltend zwischen 5 und 8 cyclische Kohlenstoffatome, gegebenenfalls substituiert,
. einen Rest Aryl, enthaltend zwischen 6 und 12 Kohlenstoffatome, gegebenenfalls substituiert,
. einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl,
- R"² ebenfalls OH entsprechen kann, unter der Bedingung, nach der mindestens einer der Reste R"² (vorzugsweise beide) OH entsprechen, wenn x'=0 ist.

20. Zusammensetzung nach einem der vorstehenden Ansprüche, **dadurch gekennzeichnet, dass** die Organosiloxan-Monomeren, -Oligomeren, -Polymeren mit reaktiven Struktureinheiten ≡SiH 1 bis 50 aktive Struktureinheiten ≡SiH pro Molekül umfassen.

21. Zusammensetzung nach einem der vorstehenden Ansprüche, **dadurch gekennzeichnet, dass** die Organosiloxan-Monomeren, -Oligomeren, -Polymeren mit reaktiven Struktureinheiten ≡SiOH 1 bis 50 aktive Struktureinheiten ≡SiOH pro Molekül umfassen.

22. Zusammensetzung nach einem der vorstehenden Ansprüche, **dadurch gekennzeichnet, dass** die Organosiloxan-Monomeren, -Oligomeren, -Polymeren -A- mit reaktiven Struktureinheiten ≡SiH unter den folgenden Verbindungen der Formel: 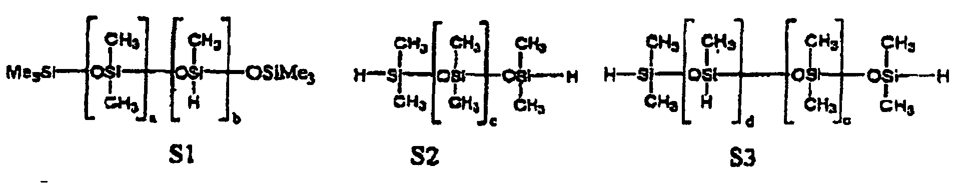 a, b, c, d und e, die eine Zahl darstellen, variierend von:
- in dem Polymer der Formel S1:
0 ≤ a ≤ 150, vorzugsweise 0 ≤ a ≤ 100, vorzugsweise 0 ≤ a ≤ 20, und
1 ≤ b ≤ 55, vorzugsweise 10 ≤ b ≤ 55, vorzugsweise 30 ≤ b ≤ 55,
- in dem Polymer der Formel S2:
0 ≤ cm 15,
- in dem Polymer der Formel S3:
5 ≤ d ≤ 200, vorzugsweise 20 ≤ d ≤ 50, und
2 ≤ e ≤ 50, vorzugsweise 10 ≤ e ≤ 30.

23. Zusammensetzung nach einem der vorstehenden Ansprüche, **dadurch gekennzeichnet, dass** die Organosiloxan-Monomeren, -Oligomeren, -Polymeren -B- mit reaktiven Struktureinheiten ≡SiOH unter den Verbindungen der Formel: 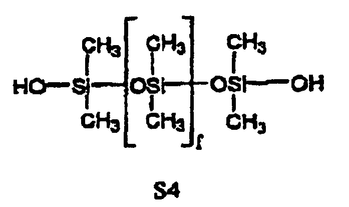 ausgewählt werden,
mit 1 ≤ f ≤ 1200, vorzugsweise 50 ≤ f ≤ 400, vorzugsweise
150 ≤ f ≤ 250.

24. Zusammensetzung nach einem der vorstehenden Ansprüche, **dadurch gekennzeichnet, dass** das Verhältnis ≡SiH/≡SiOH zwischen einschließlich 1 und 100, vorzugsweise zwischen 10 und 50 und noch mehr bevorzugt zwischen 15 und 45 beträgt.

25. Verfahren zur Polymerisation und/oder Vernetzung einer Zusammensetzung nach irgendeinem der vorstehenden Ansprüche, **dadurch gekennzeichnet, dass** man eine Dehydrokondensation zwischen den genannten Verbindungen -A- und -B- durchführt, und dass die genannte Dehydrokondensation durch Thermoaktivierung des katalytischen Komplexes -C- initiiert wird.

26. Verfahren zur Herstellung von mindestens einer nichthaftenden Beschichtung auf einem - vorzugsweise weichen - Träger, **dadurch gekennzeichnet, dass** es das Aufbringen einer Zusammensetzung nach irgendeinem der Ansprüche 1 bis 24 umfasst, und man anschließend in der Weise vorgeht, dass die Vernetzung stattfindet.

27. Verfahren zur Herstellung von mindestens einem Artikel aus vernetztem Siliconschaum, **dadurch gekennzeichnet, dass** es das Aufbringen einer Zusammensetzung nach irgendeinem der Ansprüche 1 bis 24 auf diesen Träger umfasst, und man anschließend in der Weise vorgeht, dass die Vernetzung stattfindet.

28. Verfahren zur Herstellung von einem verzweigten Polyorganosiloxan, das mindestens zwei Polyorganosiloxan-Ketten umfasst, untereinander verbunden durch eine Gruppe Siloxyl Si-O-Si, bei dem man eine Reaktion der Dehydrokondensation zwischen einem Organosiloxan-Monomeren, -Oligomeren, -Polymeren A', umfassend reaktive Struktureinheiten ≡SiH, und einem Organosiloxan-Monomeren, -Oligomeren, -Polymeren B', umfassend reaktive Struktureinheiten ≡SiOH, durchführt, **dadurch gekennzeichnet, dass** die genannte Reaktion der Dehydrokondensation in Anwesenheit des katalytischen Komplexes C, definiert nach einem der Ansprüche 1 bis 15, durchgeführt wird, gegebenenfalls initiiert durch Thermoaktivierung.

29. Verfahren zur Herstellung von einem verzweigten Polyorganosiloxan nach Anspruch 28, bei dem das Verhältnis ≡SiH/≡SiOH über 1 beträgt.
